# EUROPÄISCHE PATENTANMELDUNG

(11) **EP 1 610 034 A2**
(43) Veröffentlichungstag der Anmeldung: **28.12.2005**
(21) Anmeldenummer: 05012847.9
(22) Anmeldetag: 15.06.2005
(51) Int. Cl.: F16H 37/02

(54) **Festscheibenbaugruppe mit Anfahrkupplung und Drehmomentfühleinrichtung**

(30) Priorität: 25.06.2004 DE 102004030738
(71) Anmelder: LuK Lamellen und Kupplungsbau Beteiligungs KG, 77815 Bühl (DE)
(72) Erfinder: Lorenz, Elmar, 76549 Hügelsheim (DE)

(57) **Zusammenfassung**

Eine Festscheibenbaugruppe für ein Kegelscheibenumschlingungsgetriebe enthält eine starr mit einer Eingangswelle (10) verbundene Festscheibe (12) eine Antriebswelle (18), eine Reibungskupplung (38) mit einem drehfest mit der Antriebswelle (18) verbundenen Eingangsglied (26,30,96) und einem in reibschlüssigen Eingriff mit dem Eingangsglied bringbaren Ausgangsglied sowie eine zwischen dem Ausgangsglied (40) und der Festscheibe (12) wirksame Drehmomentfühleinrichtung (56) mit einer starr mit der Festscheibe (12) verbundenen Spreizfläche (54) und einem axial relativ zur Festscheibe (12) beweglichen Fühlglied (60). Das Ausgangsglied (40) der Reibungskupplung (38) ist an der von der Kegelfläche (14) abgewandten Seite der Festscheibe (12) angeordnet und koaxial zur Eingangswelle (10) drehbar gelagert. Das Fühlglied (60) ist an einer äußeren Umfangsfläche des Ausgangsgliedes axial beweglich und in Umfangsrichtung unbeweglich geführt.

## Beschreibung

Die Erfindung betrifft eine Festscheibenbaugruppe mit Anfahrkupplung und Drehmomentfühleinrichtung zur Verwendung in einem Kegelscheibenumschlingungsgetriebe.

Kegelscheibenumschlingungsgetriebe haben bezüglich automatisierter Handschaltgetriebe oder mit Planetensätzen arbeitender automatischer Getriebe den Vorteil, dass mit ihnen die Übersetzung stufenlos veränderbar ist. Dies führt nicht nur zu Komfortvorteilen, sondern bei zweckentsprechender Ausbildung des Kegelscheibenumschlingungsgetriebes auch zu Verbrauchsvorteilen.

Bekannt ist, zwischen einer von einem Antriebsmotor, beispielsweise einer Hubkolbenbrennkraftmaschine, angetriebenen Antriebswelle und einer Eingangswelle des Kegelscheibenumschlingungsgetriebes, die mit einer Festscheibe eines Kegelscheibenpaares starr verbunden ist, eine Drehmomentfühleinrichtung vorzusehen, die das von dem Kegelscheibenumschlingungsgetriebe übertragene Moment erfasst und einen Anpressdruck, mit dem die Kegelscheiben zweier Kegelscheibenpaare, zwischen denen ein Umschlingungsmittel reibschlüssig umläuft, einstellt. Eine solche Drehmomentfühleinrichtung ist beispielsweise aus der DE 199 394 35 A1 oder auch der DE 195 454 92 A1 bekannt. Weiter ist bekannt, als Anfahrkupplung einen hydraulischen Drehmomentwandler vorzusehen, der ein auf der Eingangswelle des Umschlingungsgetriebes gelagertes Ritzel antreibt, das den Eingang der Drehmomentfühleinrichtung bildet, deren Ausgang drehfest mit der Antriebswelle bzw. der Festscheibe verbunden ist. Zwischen dem Drehmomentwandler und dem Antriebsritzel kann für Rückwärtsfahrt eine Drehrichtungsumkehrstufe vorgesehen sein (WO 03/059676).

Der Erfindung liegt die Aufgabe zu Grunde, ein Kegelscheibenumschlingungsgetriebe zu schaffen, das bei kompaktem Aufbau eine Reibungskupplung als Anfahrkupplung für Vorwärtsfahrt enthält und das in einfacher Weise mit einer Rückwärtsfahreinrichtung ergänzbar ist.

Diese Aufgabe wird mit einer Festscheibenbaugruppe mit Anfahrkupplung und Drehmomentfühleinrichtung zur Verwendung in einem Kegelscheibenumschlingungsgetriebe gelöst, die enthält: eine starr mit einer Eingangswelle eines Kegelscheibenumschlingungsgetriebes verbundene Festscheibe mit einer Kegelfläche für einen Reibeingriff mit einem Umschlingungsmittel, eine Antriebswelle, eine Reibungskupplung mit einem drehfest mit der Antriebswelle verbundenen Eingangsglied und einem in reibschlüssigem Eingriff mit dem Eingangsglied bringbaren Ausgangsglied, und einer zwischen dem Ausgangsglied und der Festscheibe wirksamen Drehmomentfühleinrichtung mit einer starr mit der Festscheibe verbundenen Spreizfläche und einem axial relativ zur Festscheibe beweglichen Fühlglied, dessen axiale Stellung einen von der Drehmomentfühleinrichtung gesteuerten Druck bestimmt, wobei das Ausgangsglied der Reibungskupplung an der von der Kegelfläche abgewandten Seite der Festscheibe angeordnet und koaxial zur Eingangswelle drehbar gelagert ist, und das Fühlglied an einer äußeren Umfangsfläche des Ausgangsgliedes axial beweglich und in Umfangsrichtung unbeweglich geführt ist.

Vorteilhaft ist auf der von der Festscheibe abgewandten Seite der Reibungskupplung eine Umkehrreibungskupplung angeordnet, deren Eingangsglied über ein Getriebe in die Drehrichtung umkehrenden Eingriff mit dem Ausgangsglied der Reibungskupplung ist und in Reibeingriff mit einem ortsfesten Gehäuse der Umkehrreibungskupplung bringbar ist.

Das Eingangsglied der Umkehrreibungskupplung ist bevorzugt der Drehmomentfühleinrichtung axial benachbart und mit einem Hohlrad des als Planetengetriebe ausgebildeten Getriebes drehfest verbunden.

Vorteilhaft ist weiter eine Ausbildung der erfindungsgemäßen Festscheibenbaugruppe derart, dass das Gehäuse der Umkehrreibungskupplung einen radial außerhalb der Drehmomentfühleinrichtung angeordneten, der Festscheibe zugewandten Zylinderansatz aufweist, der mit dem Eingangsglied der Umkehrreibungskupplung in Reibeingriff bringbar ist.

Die Kühlung der Reibungskupplungen und des Getriebes erfolgt vorteilhaft mittels durch das Kupplungsgehäuse zugeführten Kühlmittels.

Wenn sich ein Betätigungskolben der Umkehrreibungskupplung über eine Tellerfeder an einem Anschlagbauteil abstützt, ist das Anschlagbauteil vorteilhaft als ein Leitbauteil ausgebildet, das radial innerhalb des Anschlagbauteils zugeführtes Kühlungsmittel dem Getriebe zugeführt.

Alternativ oder zusätzlich kann ein Betätigungskolben der Umkehrreibungskupplung mit einem Leitbauteil verbunden sein, dass bei offener Umkehrreibungskupplung einen zu dem Reibeingriff der Umkehrreibungskupplung für einen Durchlass für radial innerhalb des Anschlagsvorteils zugeführtes Kühlmittel sperrt und das Kühlmittel dem Getriebe zuführt.

Eine vorteilhafte Ausführungsform der erfindungsgemäßen Festscheibenbaugruppe zeichnet sich weiter dadurch aus, dass zwischen dem Ausgangsglied der Reibungskupplung und einem an der von der Festscheibe abgewandten Seite des Ausgangsgliedes befindlichen Umfangsrand eines starr mit der Festscheibe verbundenen, einen Teil der Drehmomentfühleinrichtung bildenden Ringbauteils eine Lagerung vorgesehen ist, die von einer Betätigungseinrichtung der Reibungskupplung auf das Ausgangsglied aufgebrachte, axial von der Festscheibe weg gerichtete Kräfte abstützt.

Eine achsparallele, radial auswärts gerichtete Umfangsfläche eines Betätigungskolbens der Reibungskupplung kann eine Führungs- und Dichtfläche für einen Kolben der Drehmomentfühleinrichtung bilden.

Vorteilhafterweise sind die Antriebswelle und die Eingangswelle koaxial nebeneinander angeordnet, ist die Antriebswelle in dem Gehäuse der Umkehrreibungskupplung gelagert und ist ein Ansatz der Eingangswelle in einer Ausnehmung der Antriebswelle gelagert. Bevorzugt ist weiter eine Ausbildung der Festscheibenbaugruppe derart, dass in einem radial nach außen führenden Ringspalt zwischen der Drehmomentfühleinrichtung und der Umkehrreibungskupplung ein Kompensationsteil angeordnet ist, das den Durchtrittsquerschnitt des Ringspalts mit zunehmender Drehzahl verkleinert.

Die Erfindung, die für weitgehend alle Arten von Kegelscheibenumschlingungsgetrieben verwendet werden kann, wird im Folgenden anhand schematischer Zeichnungen beispielsweise und mit weiteren Einzelheiten erläutert.

Es stellen dar:
- Fig. 1: einen axialen Halbschnitt durch ein erste Ausführungsform einer erfindungsgemäßen Festscheibenbaugruppe und
- Fig. 2: einen axialen Halbschnitt durch eine zweite Ausführungsform einer erfindungsgemäßen Festscheibenbaugruppe.

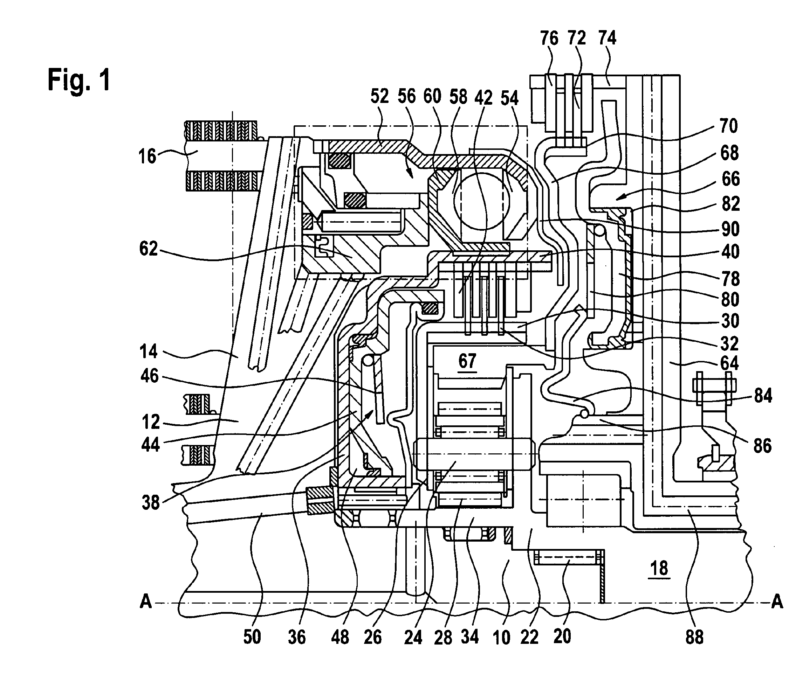

Gemäß Figur 1 weist ein Kegelscheibenumschlingungsgetriebe, von dem in Figur 1 nur ein Halbschnitt einer Festscheibenbaugruppe dargestellt ist, eine Eingangswelle 10 auf, die einteilig mit einer Festscheibe 12 ausgebildet ist. Die Festscheibe 12 weist innenseitig eine Kegelfläche 14 auf, an der reibschlüssig ein Umschlingungsmittel 16 umläuft. Der Abstand des Umschlingungsmittels von der Drehachse A-A hängt vom Abstand zwischen der nicht dargestellten, axial relativ zur Eingangswelle 10 beweglichen Losscheibe und der Festscheibe 12 ab.

Koaxial zur Eingangswelle 10 ist eine Antriebswelle 18 angeordnet, die eine Ausnehmung aufweist, zwischen der und einem axialen Ansatz der Eingangswelle 10 ein Lager 20 angeordnet ist.

Die Antriebswelle 18 weist einen radialen Ringansatz 22 auf, an dem über Lagerbolzen 24 ein Gehäuse 26 eines insgesamt mit 28 bezeichneten Planetengetriebes befestigt ist.

Die gemäß Figur 1 linke Gehäusehälfte des Gehäuses 26 bildet das Eingangsglied einer noch zu beschreibenden Vorwärtskupplung und endet radial auswärts in einem Zylinderansatz 30, mit dem drehfest mit Reibbelägen versehene Kupplungsscheiben 32 verbunden sind.

Ein auf der Eingangswelle 10 gelagertes Zahnrad 34 des Planetengetriebes 28 ist drehfest mit einem der Rückseite der Festscheibe 12 benachbarten, ebenfalls auf der Eingangswelle 10 gelagerten Kupplungskorb 36 der insgesamt mit 38 bezeichneten Vorwärtskupplung verbunden, der über zwei zylindrische Zwischenbereiche in einem radialen äußeren Zylinderbereich 40 endet, an dem drehfest und ähnlich wie die Scheiben 32 axial begrenzt beweglich Anpressscheiben 42 angebracht sind.

Die Vorwärtskupplung 38 weist weiter einen in dem Kupplungskorb 36 axial beweglich und dicht geführten Betätigungskolben 44 auf, der gegen die Kraft einer Tellerfeder 46 gemäß Figur 1 nach rechts bewegbar ist, um die Anpresscheiben 42 in Reibeingriff mit Kupplungsscheiben 32 zu bringen.

Zur Bewegung des Betätigungskolbens 44 wird ein zwischen dem Kupplungskorb 36 und dem Betätigungskolben 44 ausgebildeter Druckraum 48 über eine in der Festscheibe ausgebildete Leitung 50 mit Hydraulikmitteldruck beaufschlagt.

Mit der Rückseite der Festscheibe 12 ist an deren Außenumfang ein Zylinderring 52 verschweißt, der an seinem freien Ende abwärts gebogen ist und innenseitig erste Spreizflächen 54 eines insgesamt mit 56 bezeichneten Drehmomentfühlers bildet.

Den ersten Spreizflächen 54 gegenüberliegende zweite Spreizflächen 58 sind an einem Fühlglied 60 ausgebildet, das über eine Axialverzahnung mit der Umfangsfläche des Zylinderbereichs 40 in drehfestem Eingriff ist, jedoch relativ zum Zylinderbereich 40 axial verschiebbar ist. Zwischen dem Spreizflächen 54 und 58 sind Spreizteile, beispielsweise Kugeln angeordnet. Die Spreizflächen 54 und 58 sind an sich bekannter Weise derart geformt, dass bei einer Relativdrehung zwischen den Spreizflächen 54 und 58 um die Achse A-A, sich der Abstand zwischen den Spreizflächen ändert. Dadurch verschiebt sich das Fühlglied 60 in axialer Richtung und verschiebt einen insgesamt mit 62 bezeichneten Momentenfühlerkolben, der in an sich bekannter Weise und daher im einzelnen nicht beschrieben Hydraulikmitteldurchlässe derart steuert, dass in Momentendruckräumen des Kegelscheibenumschlingungsgetriebes ein vom übertragenen Moment abhängiger Druck herrscht. Dieser vom übertragenen Moment abhängige Druck kann zusätzlich in an sich bekannter Weise von der jeweiligen Übersetzung des Getriebes abhängig sein. Aufbau und Funktion des Drehmomentfühlers 56 sind an sich bekannt und werden daher nicht erläutert.

Auf der von der Festscheibe 12 abgewandten Seite der Vorwärtskupplung 38 ist auf der Antriebswelle 18 ein Gehäuse 64 einer insgesamt 66 bezeichneten Rückwärtskupplung gelagert. Das Gehäuse 64 ist ortsfest.

An einem Hohlrad 67 des Planetengetriebes 28 ist starr eine sich insgesamt radial erstreckende Ringscheibe 68 befestigt, die in einem Zylinderansatz 70 endet. Die Ringscheibe 68 und der Zylinderansatz 70 bilden, ähnlich wie der Zylinderansatz 30 des Gehäuses des Planetengetriebes 28 das Eingangsglied der Vorwärtskupplung 38 bilden, das Eingangsglied der Rückwärtskupplung 66. Dazu sind an dem Zylinderansatz 70 drehfest mit Reibbelegen versehene Kupplungsscheiben 72 befestigt, die zwischen drehfest an einem Zylinderansatz 74 des Gehäuses 64 befestigten Anpressscheiben 76 angeordnet sind.

Zur Betätigung der Rückwärtskupplung 66 dient ein Betätigungskolben 78, der gegen die Kraft einer Tellerfeder 80 gemäß Figur 1 nach links bewegbar ist, wenn eine zwischen dem Betätigungskolben 78 und dem Gehäuse 64 ausgebildete Druckkammer 82 mit Druck beaufschlagt wird. Die Tellerfeder 80 liegt an einem Leitblech 84 an, das sich radial innen an einem Gehäusevorsprung 86 abstützt und radial außen eine Anlage für die Tellerfeder 80 bildet.

Über eine in dem Gehäuse 64 ausgebildete Hydraulikmittelleitung 88 wird Hydraulikfluid unterhalb des Leitbleches 84 in den Raum zwischen den Kupplungen eingeleitet, in dem auch das Planetengetriebe 28 angeordnet ist. Zusätzlich wird die Druckkammer 82 von diesem Hydraulikmittel mit Druck beaufschlagt.

### Die Funktion der beschriebenen Anordnung ist wie folgt:

Bei Vorwärtsfahrt ist die Druckkammer 82 drucklos, d. h. die Rückwärtskupplung geöffnet.

Der Druckraum 48 der Vorwärtskupplung 38 wird druckbeaufschlagt, so dass die Vorwärtskupplung mit Hilfe des Betätigungskolbens 44 geschlossen wird und eine über Reibschluss vermittelte drehfeste Verbindung zwischen der Antriebswelle 18 und dem Zylinderbereich 40 besteht. Die Drehung wird auf das Fühlglied 60 und von diesem über die Spreizglieder auf den Zylinderring 52 und damit die Festscheibe 12 übertragen. Je nach übertragenem Drehmoment ändert sich die axiale Stellung des Fühlglieds 60 des Drehmomentfühlers 56.

Bei Rückwärtsfahrt ist der Druckraum 48 drucklos und wird die Druckkammer 82 mit Druck beaufschlagt, so dass die Rückwärtskupplung schließt und das Hohlrad 67 zum Stillstand kommt. Dadurch wird die Drehung der Antriebswelle 18 mit umgekehrter Drehrichtung auf den Kupplungskorb 36 übertragen, so dass die Festscheibe 12 in umgekehrter Richtung dreht.

Wie ersichtlich, ist das Leitblech 84 in seinem an dem Gehäuseansatz 86 anschließenden Bereich derart geformt, dass es das radial innerhalb des Leitblechs zugeführte Hydraulik- bzw. Kühlmittel in das Innere des Hohlrades und weiter zur Vorwärtskupplung leitet.

Insgesamt werden mit der beschriebenen Ausbildung der Baugruppe folgende wesentliche Vorteile erzielt:

Die vollständig in Hydrauliköl bzw. Kühlmittel laufenden Reibungskupplungen arbeiten weitgehend verschleißfrei und sind genau steuerbar. Die Anordnung des Drehmomentfühlers seitlich neben und innerhalb der Rückwärtskupplung sowie radial außerhalb der Vorwärtskupplung und die verschachtelte Anordnung des als Umkehrgetriebe wirksamen Planetengetriebes innerhalb der Vorwärtskupplung ermöglicht eine außerordentlich kompakte Ausbildung. Der Abstand zwischen dem mittleren Bereich der Kegelfläche 14 der Festscheibe 12 und der gemäß Figur 1 rechten Außenseite des Gehäuses 64 kann weniger als 100 mm tragen. Die Anordnung des Fühlgliedes 60 auf der Außenseite des Kupplungskorbes 36 ermöglicht eine einfache Verzahnungsgeometrie, die hohe Funktionssicherheit mit geringen Kosten verbindet.

Zur Kompensation der Fliehölkraft bzw. damit bei hohen Drehzahlen Kühlöl nur in begrenztem Maß nach radial außen abströmt, kann an der Außenseite des Zylinderrings 52 ein Zusatzblech 90 angebracht werden, das sich mit zunehmender Drehzahl derart verformt, dass ein Durchtrittsquerschnitt zwischen dem Zylinderring 52 und der Ringscheibe 68 kleiner wird.

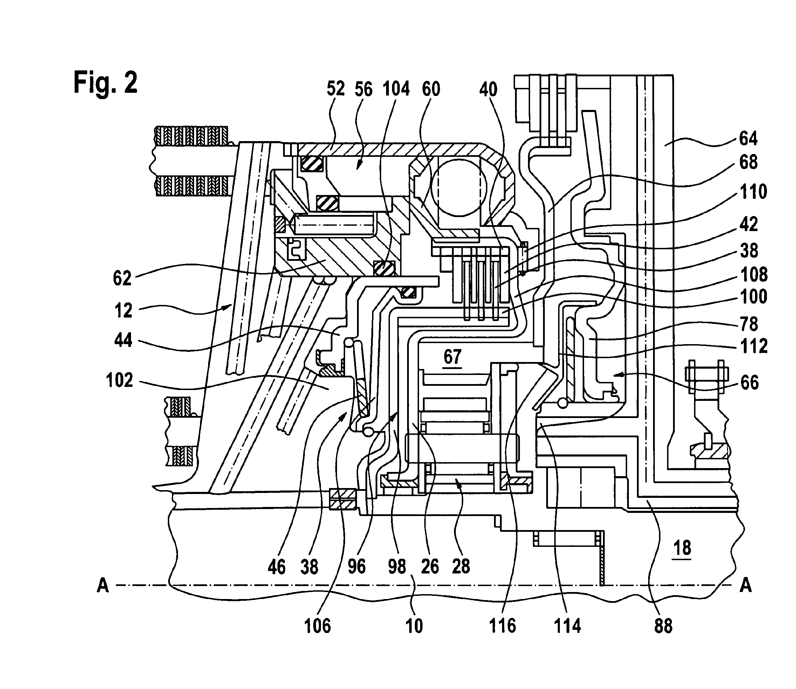

Anhand der Figur 2 wird im folgenden ein weiteres Ausführungsbeispiel einer erfindungsgemäßen Festscheibenbaugruppe beschrieben, wobei der Übersichtlichkeit halber nicht alle Bauteile mit Bezugszeichen belegt sind, sondern vor allem diejenigen, die zur Erläuterung der Unterschiede zwischen den beiden Baugrupppen wesentlich sind.

Bei der Ausführungsform gemäß Figur 2 ist die Antriebswelle 18 starr mit einem das Eingangsglied 96 der Vorwärtskupplung 38 bildenden Ringflansch 98 verbunden, der in einem Zylinderbereich 100 endet, an dem die Kupplungsscheiben 32 drehfest angebracht sind. Der Betätigungskolben 44 der Vorwärtskupplung ist einerseits dicht an einem Ansatz 102 der Festscheibe 12 und andererseits mittels einer Dichtung 104 dichtend unmittelbar am Momentenfühlerkolben 62 geführt. Die Tellerfeder 46 zum Drängen des Betätigungskolbens 44 in dessen die Kupplung öffnende Stellung stützt sich an dem Betätigungskolben 44 und einem Anschlagringteil 106 ab, das zwischen der Festscheibe und einem Zylinderansatz des Betätigungskolbens 44 angeordnet ist.

Die Anpressscheiben 42 der Vorwärtskupplung 38 sind nicht, wie bei der Ausführungsform gemäß Figur 1, an einem Kupplungskorb 36, sondern an einer Verlängerung des Gehäuses 26 des Planetengetriebes 28 angeordnet, die gemäß Figur 2 zunächst nach rechts zu einem Zylinderbereich gebogen ist, dann radial in einem Ringansatz weiter verläuft und nach links zu einem Zylinderbereich 40 abgebogen ist, der die Anpressscheiben 42 trägt und mit dem das Fühlglied 60 in Eingriff ist.

Zwischen dem radial auswärts verlaufenden Ringbereich 108 der Gehäuseverlängerung und einem radial verlaufendem Endbereich des starr mit der Festscheibe 12 verbundenen Zylinderrings 52 ist ein Axialdrucklager, beispielsweise in Form eines Nadellagers angeordnet, das vom Betätigungskolben 44 her ausgeübte Betätigungskräfte abstützt.

Ein weiterer Unterschied zur Ausführungsform gemäß Figur 1 liegt in einem vorzugsweise aus Kunststoff ausgebildeten Leitring 112, der am Betätigungskolben 78 der Rückwärtskupplung befestigt ist und sich oberhalb der Einleitöffnung 114 für Kühlfluid an einem Ansatz des Gehäuses 64 abstützt. Der Leitring 112 weist einen Ringvorsprung 116 auf, der derart geformt ist, dass er sich in der dargestellten Offenstellung der Rückwärtskupplung 66 im wesentlichen an eine innere Ringfläche des Ansatzes des Hohlrades 67 anlegt, so dass der Fluiddurchlass zu dem Reibeingriff der Rückwärtskupplung 66 verschlossen ist und das Kühlfluid vollständig dem Planetengetriebe 28 bzw. dem Reibeingriff der Vorwärtskupplung zugeleitet wird.

Mit der Ausbildung der Festscheibbaugruppe gemäß Anspruch 2 werden gegenüber der Figur 1 folgenden wesentlichen zusätzlichen Vorteile erzielt:

Um den Momentenfühlerkolben 62 radial möglichst weit innen anordnen zu können, dichtet der Betätigungskolben 44 der Vorwärtskupplung 38 unmittelbar gegen den Momentenkolben 62. Die Abstützung der Axialkraft bei geschlossener Vorwärtskupplung über das Axialdrucklager 110 bewirkt eine Einleitung dieser Axialkraft unmittelbar in den sehr stabil ausgebildeten Zylinderring 52, wodurch andere Bauteile kraftentlastet werden. Bei hohen Drehzahlen biegt sich der Zylinderring 52 etwas auf, so dass der nach radial außen führende Durchlass zwischen dem Zylinderring 52 und der Ringscheibe 68 zur Kompensation von Fliehölkräften dienen kann.

Es sei darauf hingewiesen, dass Merkmale der beiden geschilderten Ausführungsformen in unterschiedlicher Weise miteinander kombiniert werden können. Mit beiden Ausführungsformen, die in vielfältiger Weise abgeändert werden können, wird durch die ineinander verschachtelte Anordnung von Vorwärtskupplung, Drehmomentfühler, Rückwärtskupplung und Umkehrgetriebe unmittelbar an der Rückseite der Festscheibe eine außerordentlich kompakte Ausbildung der Festscheibenbaugruppe erzielt.

### Bezugszeichenliste

- 10: Eingangswelle
- 12: Festscheibe
- 14: Kegelfläche
- 16: Umschlingungsmittel
- 18: Antriebswelle
- 20: Lager
- 22: Ringansatz
- 24: Lagerbolzen
- 26: Gehäuse
- 28: Planetengetriebe
- 30: Zylinderansatz
- 32: Kupplungsscheibe
- 34: Zahnrad
- 36: Kupplungskorb
- 38: Reibungskupplung
- 40: Ausgangsglied
- 44: Betätigungskolben
- 46: Tellerfeder
- 48: Druckraum
- 50: Leitung
- 52: Zylinderring
- 98: Ringflansch
- 100: Zylinderbereich
- 102: Ansatz
- 104: Dichtung
- 106: Anschlagring
- 108: Ringbereich
- 110: Axialdrucklager
- 112: Leitring
- 114: Öffnung
- 116: Ringvorsprung

- 54: Spreizfläche
- 56: Drehmomentfühler
- 58: Spreizfläche
- 60: Fühlglied
- 62: Momentenfühlerkolben
- 64: Gehäuse
- 66: Rückwärtskupplung
- 67: Hohlrad
- 68: Ringscheibe
- 70: Zylinderansatz
- 72: Kupplungsscheibe
- 74: Zylinderansatz
- 76: Anpressscheibe
- 78: Betätigungskolben
- 80: Tellerfeder
- 82: Druckkammer
- 84: Leitblech
- 86: Gehäuseansatz
- 88: Leitung
- 90: Zusatzblech
- 96: Eingangsglied

## Patentansprüche

1. Festscheibenbaugruppe mit Anfahrkupplung und Drehmomentfühleinrichtung zur Verwendung in einem Kegelscheibenumschlingungsgetriebe, enthaltend
eine starr mit einer Eingangswelle (10) eines Kegelscheibenumschlingungsgetriebes verbundene Festscheibe (12) mit einer Kegelfläche (14) für einen Reibeingriff mit einem Umschlingungsmittel (16),
eine Antriebswelle (18),
eine Reibungskupplung (38) mit einem drehfest mit der Antriebswelle verbundenen Eingangsglied (26, 30, 96) und
einem in reibschlüssigen Eingriff mit dem Eingangsglied bringbaren Ausgangsglied (40) und einer zwischen dem Ausgangsglied und der Festscheibe wirksamen Drehmomentfühleinrichtung (56) mit einer starr mit der Festscheibe verbundenen Spreizfläche (54) und einem axial relativ zur Festscheibe beweglichen Fühlglied (60), dessen axiale Stellung einen von der Drehmomentfühleinrichtung gesteuerten Druck bestimmt,
wobei das Ausgangsglied (40) der Reibungskupplung (38) an der von der Kegelfläche (14) abgewandten Seite der Festscheibe angeordneten und koaxial zur Eingangswelle drehbar gelagert ist, und das Fühlglied (60) an einer äußeren Umfangsfläche des Ausgangsgliedes axial beweglich und in Umfangsrichtung unbeweglich geführt ist.

2. Festscheibenbaugruppe nach Anspruch 1, wobei auf der von der Festscheibe (12) abgewandten Seite der Reibungskupplung (38) eine Umkehrreibungskupplung (66) angeordnet ist, deren Eingangsglied (68) über ein Planetengetriebe (28) in die Drehrichtung umkehrenden Eingriff mit dem Ausgangsglied (40) der Reibungskupplung (38) ist und in Reibeingriff mit einem ortsfesten Gehäuse (64) der Umkehrreibungskupplung (66) bringbar ist.

3. Festscheibenbaugruppe nach Anspruch 2, wobei das Eingangsglied (68) der Umkehrreibungskupplung (66) der Drehmomentfühleinrichtung (56) axial benachbart ist und mit einem Hohlrad (67) des als Planetengetriebe (28) ausgebildeten Getriebes drehfest verbunden ist.

4. Festscheibenbaugruppe nach Anspruch 2 oder 3, wobei das Gehäuse (64) der Umkehrreibungskupplung (66) einen radial außerhalb der Drehmomentfühleinrichtung (56) angeordneten, der Festscheibe (12) zugewandten Zylinderansatz (74) aufweist, der mit dem Eingangsglied (68) der Umkehrreibungskupplung (66) in Reibeingriff bringbar ist.

5. Festscheibenbaugruppe nach Anspruch 4, wobei die Kühlung der Reibungskupplungen (38, 66) und des Getriebes (28) mittels durch das Kupplungsgehäuses (64) zugeführten Kühlmittels erfolgt.

6. Festscheibenbaugruppe nach Anspruch 5, wobei sich ein Betätigungskolben (78) der Umkehrreibungskupplung (66) über eine Tellerfeder (80) an einem Anschlagbauteil (84) abstützt, welches als ein Leitbauteil ausgebildet ist, das radial innerhalb des Anschlagbauteils zugeführtes Kühlmittel dem Getriebe (28) zuführt.

7. Festscheibenbaugruppe nach Anspruch 5, wobei ein Betätigungskolben (78) der Umkehrreibungskupplung (66) mit einem Leitbauteil (112) verbunden ist, das bei offener Umkehrreibungskupplung einen zu dem Reibeingriff der Umkehrreibungskupplung führenden Durchlass für radial innerhalb des Leitbauteils zugeführtes Kühlmittel sperrt und das Kühlmittel dem Getriebes (28) zuführt.

8. Festscheibenbaugruppe nach einem der Ansprüche 1 bis 7, wobei zwischen dem Ausgangsglied (40) der Reibungskupplung (38) und einem an der von der Festscheibe (12) abgewandten Seite des Ausgangsgliedes befindlichen Umfangsrand eines starr mit der Festscheibe verbundenen, ein Teil der Drehmomentfühleinrichtung bildenden Ringbauteils (52) eine Lagerung (110) vorgesehen ist, die von einer Betätigungseinrichtung der Reibungskupplung auf das Ausgangsglied aufgebrachte, axial von der Festscheibe weg gerichtete Kräfte abstützt.

9. Festscheibenbaugruppe nach einem der Ansprüche 1 bis 8, wobei eine achsparallele, radial auswärts gerichtete Umfangsfläche eines Betätigungskolbens (44) der Reibungskupplung (38) eine Führungs- und Dichtfläche für einen Kolben (62) der Drehmomentfühleinrichtung (56) bildet.

10. Festscheibenbaugruppe nach einem der Ansprüche 1 bis 9, wobei die Antriebswelle (18) und die Eingangswelle (10) koaxial nebeneinander angeordnet sind, die Antriebswelle (18) in dem Gehäuse (64) der Umkehrreibungskupplung (66) gelagert ist und ein Ansatz der Eingangswelle in einer Ausnehmung der Antriebswelle gelagert ist.

11. Festscheibenbaugruppe nach Anspruch 5, wobei ein einem radial nach außen führenden Ringspalt zwischen der Drehmomentfühleinrichtung (56) und der Umkehrreibungskupplung (66) ein Kompensationsteil (90) angeordnet ist, das den Durchtrittsquerschnitt des Ringspalts mit zunehmender Drehzahl verkleinert.
